Europäisches Patentamt

European Patent Office

Office européen des brevets

(11) Publication number : **0 512 573 A1**

# (12) EUROPEAN PATENT APPLICATION

(21) Application number : **92107896.0**

(22) Date of filing : **09.05.92**

(51) Int. Cl.⁵ : **H01S 3/093**

(30) Priority : **10.05.91 IT RM910317**

(43) Date of publication of application :
**11.11.92 Bulletin 92/46**

(84) Designated Contracting States :
**DE ES FR GB NL SE**

(71) Applicant : **ALENIA AERITALIA & SELENIA S.P.A.**
**Via Tiburtina, Km. 12,400**
**I-00131 Roma (IT)**

(72) Inventor : **Rumboldt, Claudio**
**Via Vetulonia, 2A**
**I-00183 Roma (IT)**
Inventor : **Landoni, Antonio**
**Via Archi, 2**
**I-00131 Roma (IT)**

(74) Representative : **Gustorf, Gerhard, Dipl.-Ing.**
**Patentanwalt Dipl.-Ing. Gerhard Gustorf**
**Bachstrasse 6 A**
**W-8300 Landshut (DE)**

(54) **Improved technique for laser cavity pumping.**

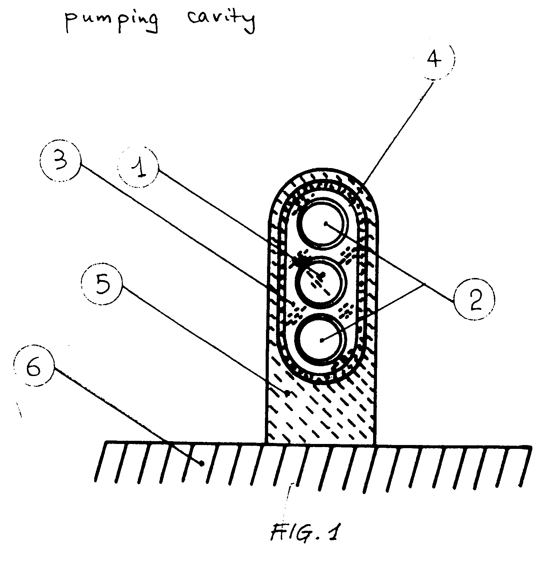

(57)   The invention concerns a tightly coupled diffusion pumping cavity in BaSO4 for a Laser operating at low repetition frequency, without a cooling device, where the Laser (Figure 1) consists of an active material rod (1) set between two lamps (2), of a metal casing (5) which is in direct contact with the diffusing element (4), where the casing may also act as a support of such diffusing element, while this may be set in any preferred position.

   Cooling is achieved by exploiting the radiation exchange between the active material rod and the cavity itself.

   The invention is best applied to those Lasers which require a compact design due to space constraints, as in the case of avionic and space-borne applications.

FIG. 1

EP 0 512 573 A1

This invention regards an improved technique for the cooling of an active material rod within a Laser cavity. This cooling action takes place by exploiting the radiation exchange between the rod and the cavity. It is a thermal exchange which takes place by conduction through a BaSO4 case in direct contact with the external support, which has a high thermal conductivity, so as to lower the thermal resistance between the cavity and the final cooling system.

In previous techniques, systems which were not cooled by conduction could support continuous operation of BaSO4 cavities only at very low repetition frequencies (less than one Herz) or at a repetition frequency of about one Herz for short times (few seconds) with frequent rest periods between operation.

Other previous techniques which adopted ceramic materials as heat sinks could support continued operation at a good repetition frequency, but a low pumping energy levels and consequential output energies.

With the present patent application, we intend to defend a Laser cavity operating at repetition frequencies which while offering in energy terms, the same performance as for single shot operation, also provides the same quality of laser beam, thanks to the presence of two lamps which operate alternatively or simultaneously. In this manner the thermal gradient which arises within the rod, is symmetrical with respect to the perpendicular which joins the rod and lamp centres. Consequently, no distorsion can take place, so that disalignment of the system damaging the beam does not take place.

The configuration proposed is of course a configuration which can be modified by changing the configuration of its parts, without any change to the philosophy of the system, while the expected results are attained.

Of course, the symmetrical configurations (lamp-rod-lamp, etc) are to be preferred to asymmetrical ones, as thermal distorsions are absent.

The invention will now be described for illustrative, non limiting purposes, with reference to the tables of drawings attached.

Figure 1- Schematic diagram of the Laser cavity. It shows the following details:

1 rod
2 lamps
3 Samario glass
4 Barium sulphate (BaSO4)
5 copper case
6 heat sink.

As mentioned, Lasers operating at a repetition frequency necessitate a cooling system for lamps and rod, which forces the dissipation of the heat due to the lamp flash, which the system cannot naturally dissipate in the time interval between one shot and another.

This invention overcomes the need for such a device by exploiting the radiation exchange between the rod and pumping cavity (figure 1). The thermal energy produced by the lamps (2) which would accumulate in the rod (1), in the lamps and in the cavity assembly (BaSO4 (4) + Samario glass (3)), is transferred by radiation exchange to the Samario glass and through conduction to the copper case (5) or to a material with the same thermal characteristics, whic encases the cavity acting as a support to the BaSO4 towards the heat sink (6). In this manner, a radiative-conductive form of thermal exchange is achieved (amply tested by the inventors), through which the cavity achieves the same performance in energy terms as for single shot operation (Ein about 11 J, Eout about 50 mJ in 8 ns) while operating continuously at a repetition frequency of up to one Herz and up to 6 Hz at 18″ on and 1′50″off cycles.

## Claims

1. Laser pumping cavity, configured as follows: The active material rod is illuminated by one or more lamps (2); the diffusing element (4) is directly in contact with the metal case (5).

2. Laser pumping cavity, where the metal case (5) may also operate as a support for the diffusing element, which may be made of BaSO4.

3. Laser pumping cavity, where the heat sink (6) may be set anywhere.

4. Laser pumping cavity as per claim 3, where the heat sink may also act as a supporting element or cover or as a carrying element.

5. Laser pumping cavity, with reference to Claim 5, where the metal case may tacke any shape preferred according to specific needs.

pumping cavity

FIG. 1

European Patent
Office

**EUROPEAN SEARCH REPORT**

Application Number

EP 92 10 7896

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 989 215 (M.WINIK) <br> * column 1 - column 3; figures 1-7 * <br> --- | 1-5 | H01S3/093 |
| Y | US-A-3 626 319 (C.G.YOUNG) <br> * column 4, line 24 - column 5, line 55; figures 1-4 * <br> ----- | 1-5 | |
| | | | TECHNICAL FIELDS SEARCHED (Int. Cl.5) |
| | | | H01S |

The present search report has been drawn up for all claims

| Place of search | Date of completion of the search | Examiner |
|---|---|---|
| THE HAGUE | 29 JULY 1992 | MALIC K. |